# Europäisches Patentamt
# European Patent Office
# Office européen des brevets

(19)

(11) Veröffentlichungsnummer: **0 289 602**
**B1**

(12) **EUROPÄISCHE PATENTSCHRIFT**

(45) Veröffentlichungstag der Patentschrift: **02.01.91**

(51) Int. Cl.⁵: **C 02 F 1/72**

(21) Anmeldenummer: **86907015.1**

(22) Anmeldetag: **23.09.86**

(86) Internationale Anmeldenummer:
**PCT/SU86/00089**

(87) Internationale Veröffentlichungsnummer:
**WO 88/02352 07.04.88 Gazette 88/08**

(54) ABWASSERKLÄRANLAGE.

(43) Veröffentlichungstag der Anmeldung:
**09.11.88 Patentblatt 88/45**

(45) Bekanntmachung des Hinweises auf die
Patenterteilung:
**02.01.91 Patentblatt 91/01**

(84) Benannte Vertragsstaaten:
**BE DE FR GB IT NL**

(56) Entgegenhaltungen:
**DE-A-3 227 277
DE-B-2 728 554
GB-A-2 037 732
GB-A-2 101 900
US-A-4 231 867
US-A-4 609 469**

**PROZESSE UND APPARATE DER CHEMISCHEN
UND PETROCHEMISCHEN TECHNOLOGIE,
1972, Seiten 321-322, Verlag "Khimia"
A. PROSKURYAKOV et al.: "Abwasserreinigung
in der chemischen Industrie", 1977, Seiten
142-143, Verlag "Khimia"**

(73) Patentinhaber: **DNEPRODZERZHINSKY
INDUSTRIALNY INSTITUT IMENI M.I.
ARSENICHEVA
ul. Dneprostroevskaya 2,
Dneprodzerzhinsk, 322618 (SU)**

(72) Erfinder: **ANDRIENKO, Nikolai Markovich
bulvar Stroitelei, 29-74
Dneprodzerzhinsk, 322640 (SU)**
Erfinder: **DRYSHLJUK, Natalya Stepanovna
ul. Arsenicheva, 95/4-14
Dneprodzerzhinsk, 322625 (SU)**
Erfinder: **PRIKHODKO, Raisa Ivanovna
ul. Leningradskaya, 115-34
Dneprodzerzhinsk, 322617 (SU)**
Erfinder: **SOLENAYA, Tamara Ivanovna
ul.Zaporozhskaya, 17-12
Dneprodzerzhinsk, 322603 (SU)**
Erfinder: **KOVALEV, Anatoly Fedorovich
Belorussky proezd, 8-55
Dneprodzerzhinsk, 322609 (SU)**
Erfinder: **ANDRIENKO, Anna Yakovlevna
ul. Moskvoretskaya, 26-36
Dneprodzerzhinsk, 322600 (SU)**
Erfinder: **BODYANJUK, Anatoly Petrovich
pr. 50 let SSSR, 1b-219
Dneprodzerzhinsk, 322637 (SU)**

Courier Press, Leamington Spa, England.

EP 0 289 602 B1

**EP  0 289 602  B1**

(72) Erfinder: **CHIRVA, Pavel Pavlovich**
**pr. Konstitutsii, 33-2**
**Dneprodzerzhinsk, 322609 (SU)**
Erfinder: **FOMENKO, Elena Nikolaevna**
**pr. Kirova, 127-12**
**Dnepropetrovsk, 320061 (SU)**

(74) Vertreter: **Finck, Dieter et al**
**Patentanwälte v. Füner, Ebbinghaus, Finck**
**Mariahilfplatz 2 & 3**
**D-8000 München 90 (DE)**

**Beschreibung**

Die Erfindung bezieht sich auf den Chemie maschinenbau, insbesondere auf die Technik der Phasentrennung disperser Mehrstoffsysteme, genauer auf die Technik der Phasentrennung emulgierter Wassersysteme.

Die vorliegende Erfindung kann in technologischen Systemen benutzt werden, die in der chemischen Industrie, der Kokereiindustrie, der Erdölindustrie, der Hüttenindustrie und in anderen Industriezweigen bei der Durchführung der Prozesse zur Reinigung disperser Wassersysteme angewendet werden.

Am effektivsten kann diese Erfindung in der Technologie der Reinigung der Abwässer und Lösungen von emulgierten Erdölprodukten benutzt werden.

Zur Zeit existiert das Problem einer Steigerung der Leistung, einer Senkung des Metallaufwandes, einer Erhöhung der Zuverlässigkeit und des Reinigungsgrades der Abwässer und Lösungen von emulgierten Erdölprodukten. Da die Anlagen zur Abwasserreinigung die Grundlage der Technologie der Vorbereitung derartiger Systeme zur Wiederverwendung oder zum Ablassen ohne Schaden für die Umwelt bilden, so eröffnet die Lösung des vorgehannten Problems den Weg zur Schaffung von gedrängten kleinbauenden örtlichen Anlagen in Produktionsbetrieben, wo die Flächen besonders begrenzt sind, hochtoxische ölhaltige Abwässer erzeugt werden und ein Mangel an Wasser besteht.

Bekannt ist eine Anlage zur Abwasserreinigung (Einrichtung zur Vorbereitung flüssiger Medien auf den Flotationsprozess nach dem UdSSR-Urheberschein Nr. 799822, IPK B03 d 1/14), die eine Mischkammer enthält, welche mit einer Belüftungskammer in Verbindung steht, deren Austritt über ein Zirkulationsrohr mit einer Regulierungsarmatur und mittels einer Umpumpvorrichtung mit dem Eintritt der Mischkammer verbunden ist.

Diese Anlage hat allerdings eine niedrige Wirksamkeit der Phasentrennung emulgierter ölhaltiger Wassersysteme und Abwässer, weil sie sich durch unzureichende Fähigkeit kennzeichnet, stabile Strukturen von konzentrierten Ölemulsions-Abwässern, z.B. von emulgierten Ölen schwefelhaltige Verbindungen, Ammoniak und andere Beimengungen enthaltenden Kompresserkondensaten, zu zerstören.

Bekannt ist auch eine Anlage zur Abwasserreinigung (A. N. Planovsky, P. I. Nikolaev "Protsessy i apparaty khimicheskoi i neftekhimischeskoi tecnologii"/Prozesse und Apparate der chemischen und petrolchemischen Technologie/, M., Verlag "Khimia", 1972, SS. 321—322), die els Apparat mit rohrförmiger Kontakteinrichtung ausgehührt ist.

Eine solche Konstruktion der Anlage zur Abwasserreinigung bedingt eine Dünnschicht-Strömungsform der Flüssigkeit und einen kontinuierlichen Gegenstrom des Gases durch rohrförmige Elemente, bei welchen keine wirksame Phasentrennung von Ölemulsions-Wassersystemen und im besonderen von Abwässern erreicht wird.

Es ist eine Anlage zur Abwasserreinigung bekannt (V. A. Proskuryakov, L. I. Shmidt "Ochistka stochmykh vod v khimicheskoi promyshlennosti, L., Verlag "Khimia", 1977, SS. 142—143/Abwasserreinigung in der chemischen Industrie/), die einen Behälter für Abwässer enthält, welcher mit einer Pumpe verbunden ist, die mit einem Vorwärmer in Verbindung steht, der mit dem Eintritt einer Oxydationskolonne verbunden ist, deren Austritt mit einem Wärmeaustauscher in Verbindung steht, wobei die Oxydationskolonne einen mit einem Abscheider in Verbindung stehenden Gasanaschluss für die Gaszufuhr aufweist.

Die Konstruktion dieser Anlage und ihrer Hauptelemente (Hauptbauteile) ermöglicht keine intensive und effektive Reinigung grosser Ströme konzentrierter ölhaltiger Abwässer von emulgierten Ölen, weil im Prozess der Wasserreinigung keine Möglichkeit erreicht wird, die disperse Zusammensetzung der Ölteilchen vollständig zu verändern, und die letzteren bleiben in beträchtlicher Menge suspendiert im gereinigten Wasser. Ausserdem setzt die Konstruktion der Anlage erhebliche Wärmeverluste mit dem Strom des gereinigten Wassers voraus.

Der Erfindung liegt die Aufgabe zugrunde, eine Anlage zur Abwasserreinigung zu schaffen, bei der dank dem konstruktiven gegenseitigen Zusammenhang von Elementen und ihrer konstruktiven Ausführung eine intensive und wirksame Technologie der Phasentrennung emulgierter disperser Systeme und im besonderen ölhaltiger Abwässer gewährleistet würde.

Das Wesen der Erfindung besteht darin, dass die Anlage zur Abwasserreinigung, die einen Behälter für Abwässer enthält, welcher mit einer Pumpe verbunden ist, die mit einem Vorwärmer in Verbindung steht, der mit dem Eintritt einer Oxydationskolonne verbunden ist, deren Austritt mit einem Wärmeaustauscher in Verbindung steht, wobei die Oxydationskolonne einen Gasanschluss für die Gaszufuhr und eine Gasableitung für Abgas aufweist, die mit einem Abscheider verbunden ist, erfindungsgemäss mit einem Reaktor zur Behandlung von Abwässern mit Reagenzien, welcher zwischen dem Vorwärmer und der Oxydationskolonne angeordnet ist, und mit einem Phasentrenner zusätzlich versehen ist, der mit dem Wärmeaustauscher in Verbindung steht, welcher mit seinem Kältemitteleinlauf und -auslauf zwischen der Pumpe und dem Vorwärmer geschaltet ist.

Eine solche konstruktive Ausführung der Anlage gestattet es, ihre Leistung wesentlich zu steigern und hohe Kennwerte der Phasentrennung zu erzielen. Dies wird dadurch erreicht, dass der Reaktor in Kombination mit anderen Elementen der Anlage die Eigenschaften des zu reinigenden Wassersystems drastisch zu verändern erlaubt und dadurch dessen disperse Phase, im besonderen die emulgierten Ölteilchen, in einen grobdispersen Zustand intensiv überführt, bei welchem die Prozesse der Schwerkraft- und der Flotationstrennung der wässrigen und nichtwässrigen Phase in der Oxydationskolonne und im Phasentrenner wesentlich beschleunigt werden, wobei der letztere die Abtrennung der feinsten Teilchen gewährleistet, welche mit dem Strom bei hoher Leistung der Oxydationskolonne fortgetragen werden. Ausserdem bietet ein solcher konstruktiver gegenseitiger Zusammenhang der Elemente der Anlage die Möglichkeit, die Wärme des gereinigten Wassers während der Vorbereitung auf die Phasentrennung des Ausgangswassers zu verwerten.

Es ist möglich, dass der Phasentrenner zusätzlich mit dem Abscheider in Verbindung steht.

Dies trägt zu einer vollständigeren Ausnutzung des Gases in der Reinigung bei, weil bei der Verbindung des Phasentrenners mit dem Abscheider das Abgas in der Phasentrennung nach Flotationsverfahren oder in der Entfernung der ausgeschiedenen Phase nach dem Verfahren der pneumatischen Förderung verwertot werden kann.

Es ist zweckmässig, dass der Reaktor zur Behandlung von Abwässern mit Reagenzien in Form einer Pumpe und eines Mischers von Wasser und Reagenzien ausgeführt ist, der am saugseitigen Eintritt der Pumpe angebracht ist, welcher mittels eines Zirkulationsrohres mit dem druckseitigen Austritt der Pumpe in Verbindung steht, während der Abscheider als Gaswäscher ausgebildet und mit seinem Abwassereinlauf und -auslauf zwischen dem Vorwärmer und dem Mischer von Wasser und Reagenzien mit seinem Gasanschluss und seiner Gasableitung aber zwischen der Oxydationskolonne und dem Phasentrenner geschaltet ist.

Eine derartige konstruktive Ausführung des Reaktors und seines gegenseitigen Zusammenhangs mit den Elementen der Anlage gewährleistet eine zusätzliche Steigerung der Leistung und der Effektivität der Anlage, weil die Pumpe des Reaktors die mechanische Behandlung des Wassers intensiviert, die zur Destabilisierung und Aggregierung der Teilchen der dispersen Phase und folglich zur nachfolgenden Abtrennung derselben vom Wasser beiträgt, während der als Gaswäscher ausgebildete Abscheider zugleich für die Reinigung der Abgase von der tropfbaren Flüssigkeit und den toxischen Beimengungen unter Benutzung des Ausgangswasserstromes während der Reinigung sorgt.

Es ist weiterhin zweckmässig, dass die Oxydationskolonne rohrförmige Einbauten besitzt, die über einem Gasdispergator auf der Seite des Gasanschlusses unter Bildung einer Kammer zur Sättigung des Abwassers mit Gas montiert sind, welche Kammer über einen Stutzen für die Wasserzufuhr verfügt, sowie geneigte und zwei vertikale Zwischenwände aufweist, die über den rohrförmigen Einbauten angebracht sind und im oberen Oxydationsteil der Kolonne eine Phasentrennungskammer bilden, welche Stutzen für die Gasabführung, für die Wasserzufuhr und die Abführung der Ölphase besitzt, wobei bei der einen vertikalen Zwischenwand die Unterkante an die Oberkante der geneigten Zwischenwand angeschlossen ist, während die Oberkante unterhalb des Stutzens für die Abführung der Ölphase liegt, und wobei bei der zweiten vertikalen Zwischenwand die Oberkante oberhalb des Stuzens für die Abführung der Ölphase gelegen ist, während sich die Unterkante über der geneigten Zwischenwand und unterhalb des Stutzens für die Wasserzufuhr befindet.

Diese konstruktive Ausführung der Oxydationskolonne der Anlage gewährleistet eine zusätzliche Steigerung der Leistung und der Effektivität der Anlage, weil die Möglichkeit der Unterdrückung einer weitläufigen Konvektion des Gas-Flüssigkeit-Gemisches in Richtung seiner Bewegung durch die Kolonne erreicht wird und dadurch optimale Bedingungen zur Behandlung der Flüssigkeit mit Gas bei der Oxydation von im Wasser gelösten und an den Teilchen adsorbierten Beimengungen, bei der Aggregierung der auf diese Weise destabilisierten Teilchen der dispersen Phase und bei der Flotationstrennung der Phasen geschaffen werden.

Es ist wünschenswert, dass der Dispergator in Form von gelochten rohrförmigen Elementen ausgebildet ist, die in der Oxydationskolonne über dem Gasanschluss mittels eines Rohrbodens angebracht sind.

Eine solche konstruktive Ausführung des Dispergators der Oxydationskolonne gestattet es, die Arbeitsfläche des Dispergators ohne Änderung der Abmessungen der Kolonne in der Querrichtung stark zu vergrössern, und bietet ausserdem die Möglichkeit, grosse Raumverhältnisse von Gas und Flüssigkeit in den rohrförmigen Einbauten der Kolonne zu erzielen, wobei sich im Gemich vorwiegend feine Gasbläschen befinden, welche sich an den Prozessen der Oxydation der Beimengungen und der Phasentrennung des dispersen Systems wirksam beteiligen.

Es ist möglich, dass die Phasentrennungskammer mit rohrförmigen Führungselementen versehen ist, die über und unter der geneigten Zwischen wand und in einem Abstand von ihr für den Wasserdurchfluss angebracht sind, wobei die Oberkanten der zwischen den vertikalen Zwischenwänden befindlichen Führungselemente in gleicher Höhe mit der Oberkante der vertikalen Zwischenwand liegen, die mit der geneigten Zwischenwand verbunden ist.

Dies erlaubt, die Phasentrennung am Austritt der Oxydationskolonne zu verbessern, weil eine effektive Entmischung der flüssigen Phasen und deren Entgasung bei der Änderung des Aufstroms des Gemisches am Austritt der rohrförmigen Führungselemente in den in die Elemente zwischen den vertikalen Zwischenwänden der Phasentrennungskammer gerichteten Abstrom erzeilt wird.

Im folgenden wird die Erfindung durch eingehende Beschreibung von Beispielen ihrer konkreten Ausführung und anhand von Zeichnungen erläutert, in denen es zeigt;

Fig. 1 das Prinzipschema der erfindungsgemässen Anlage zur Abwasserreinigung, Gesamtansicht;

Fig. 2 den Reaktor zur Behandlung von Abwässern mit Reagenzien und sein gegenseitiger Zusammenhang mit der Oxydationskolonne und dem Abscheider der Anlage zur Abwasserreinigung;

Fig. 3 die Oxydationskolonne der Anlage zur Abwasserreinigung, Längsschnitt;

Fig. 4 eine Ausführungsform der Phasentrennungskammer der Oxydationskolonne der Anlage zur Abwasserreinigung, Längsschnitt;

Fig. 5 eine Ausführungsform der Phasentrennungskammer der Oxydationskolonne der Anlage zur Abwasserreinigung, Längsschnitt;

Fig. 6 einen Schnitt nach Linie VI—VI der Fig. 3;

Fig. 7 einen Schnitt nach Linie VII—VII der Fig. 3;

Fig. 8 eine Ausführungsform des in Fig. 7 dargestellten Dispergators der Oxydationskolonne;

Fig. 9 eine Ausführungsform der Oxydationskolonne mit dem unteren Wasseraustritt, Gesamtansicht;

Fig. 10 eine Ausführungsform des technologischen Prinzipschemas der Anlage zur Abwasserreinigung.

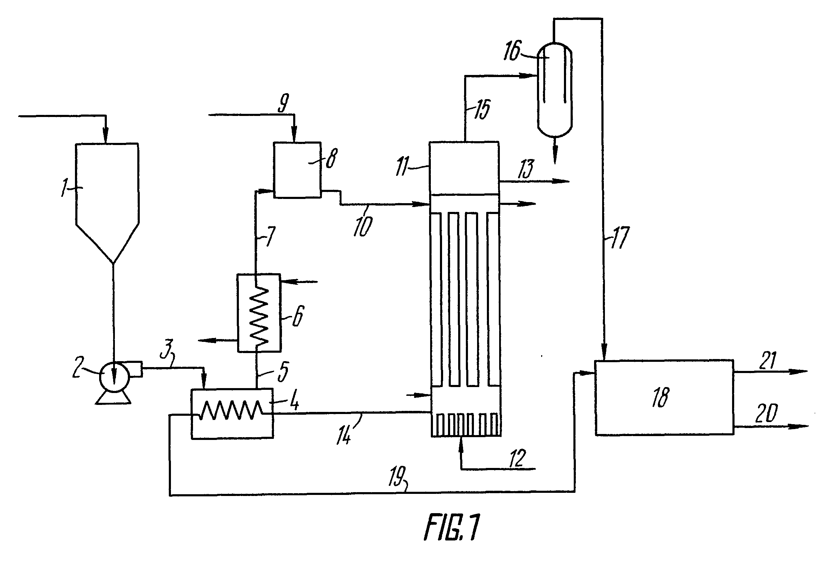

Die Anlage zur Abwasserreinigung schliesst einen Behälter 1 (Fig. 1) für Abwässer ein, als welcher ein Speicherbehälter bzw. ein Absetzbehälter verwendet werden kann; der Behälter 1 steht mit einer Pumpe 2 in Verbindung, die mittels einer Druckleitung 3 mit einem Wärmeaustauscher 4 über dessen Kältemitteleinlauf verbunden ist. Der Kältemittelauslauf des Wärmeaustauschers 4 steht mittels einer Rohrleitung 5 mit dem Eintritt eines Vorwärmers 6 in Verbindung, der wiederum mittels einer Rohrleitung 7 mit einem Reaktor 8 zur Behandlung von Abwässern mit Reagenzien verbunden ist. Der Reaktor 8 besitzt einen Eintritt 9 für Reagenzien und ist mittels einer Rohrleitung 10 mit einer Oxydationskolonne 11 über einen Abwässereinlauf verbunden, der sich im oberen oder im unteren Teil der Kolonne befinden kann. Die Oxydationskolonne 11 weist im unteren Teil einen Gasanschluss 12 und einen Ölauslauf 13 im oberen Teil. Die Oxydationskolonne 11 ist über einen Abwässerauslauf, der sich im unteren oder im oberen Teil derselben befinden kann, mittels einer Rohrleitung 14 mit dem Wärmeaustauscher 4 verbunden, während sie über eine Gasableitung mittels einer Rohrleitung 15 mit einem Abscheider 16 verbunden ist, aus welchem das Abgas in die Atmosphäre ausgelassen oder über eine Rohrleitung 17 in einen Phasentrenner 18 zu dessen Verwertung während der Phasentrennung oder der pneumatischen Förderung von aus dem Wasser ausgeschiedenen Phasen geleitet werden kann. De Phasentrenner 18 steht mittels einer Rohrleitung 19 mit dem Wärmet ägerauslauf des Wärmeaustauschers 3 in Verbindung.

Der Abscheider 16 besitzt eine Ableitung der tropfbaren Flüssigkeit, die mit dem Phasentrenner 18 oder mit dem Behälter 1 oder mit dem Reaktor 8 in Verbindung stehen kann.

Der Phasentrenner 18 kann in Form eines Absetzers eines Flotationsgerätes, eines elektrischen Flotationsgerätes ausgeführt werden und besitzt eine Ableitung 20 der gereinigten Abwässer und eine Ableitung 21 der ausgeschiedenen Phasen.

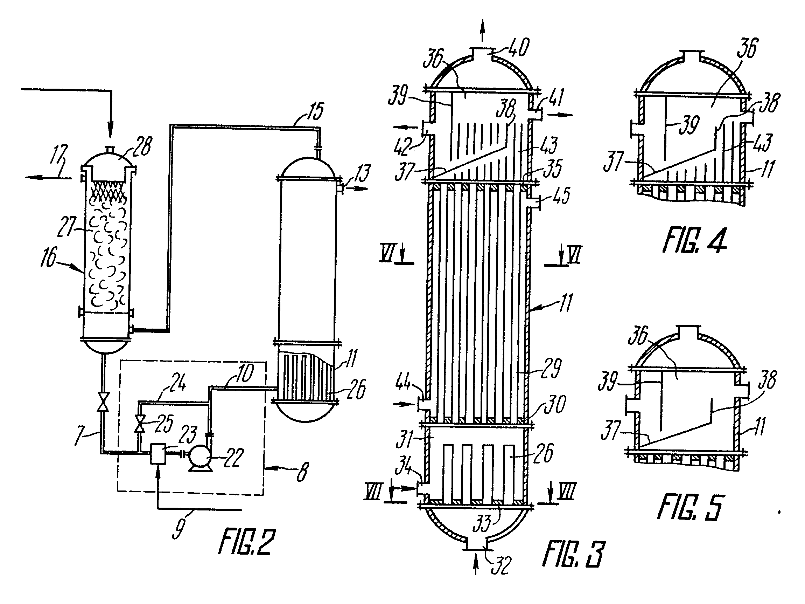

In Fig. 2 ist eine Ausführungsform des Reaktors 8 zur Behandlung von Abwässern mit Reagenzien und dessen gegenseitiger Zusammenhang mit der Oxydationskolonne 11 und dem Abscheider 16 dargestellt.

Der Reaktor 8 umfasst in dieser Ausführungsform eine Pumpe 22 (Fig. 2) und einen Mischer 23 von Wasser und Reagenzien, welcher am saugseitigen Eintritt der Pumpe angebracht ist. Der saugseitige Eintritt der Pumpe 22 ist mittels eines Zirkulationsrohres 24 mit einer Regeleinrichtung 25 und mit dem druckseitigen Austritt der Pumpe 22 verbunden. Der saugseitige Eintritt ist mit dem Abscheider 16 verbunden, während der druckseitige Austritt mit dem Abwässereinlauf der Oxydationskolonne 11 verbunden ist, welcher sich in deren unterem Teil im Bereich eines Gasdispergators 26 befindet.

Der Abscheider 16 ist in Form eines Gaswäschers mit Füllkörper 27 und Rieseleinrichtung 28 ausgeführt und mit seinem Abwässereinlauf und -auslauf an die Rohrleitung 7, mit dem Gasanschluss und der Gasableitung aber an fie Rohrleitung 15 für die Abführung des Abgases aus der Oxydationskolonne 11 und zur Fohrleitung 17 angeschlossen ist.

Bei dieser Ausführungsform des Abscheiders 16 besitzt dieser einen aus Metallspan bestehenden Füllkörper, jedoch schliesst dies nicht die Möglichkeit aus, andere Füllkörper einzusetzen. Die Rieseleinrichtung 28 des Abscheiders 16 ist als gelochte Platte ausgebildet, jedoch schliesst dies nicht die Möglichkeit aus, andere Ausführungsformen der Rieseleinrichtungen zu verwenden.

Der Abscheider 16 kann mittels der Rohrleitung 17 an den Phasentrenner 18 angeschlossen sein, jedoch schliesst dies nicht die Möglichkeit aus, das Abgas in die Atmosphäre oder in einen Tropfenfänger und dann in die Atmosphäre abzuleiten.

In Fig. 3 ist eine Ausführungsform der Oxydationskolonne der Anlage zur Abwasserreinigung im Längsschnitt dargestellt.

Die Oxydationskolonne 11 schliesst bei dieser Ausführungsform röhrförmige Einbauten 29 ein, die im unteren Teil der Kolonne 11 mittels eines Rohrbodens 30 unter Bildung im unteren Teil der Kolonne einer Kammer 31 zur Sättigung des Wassers mit Gas montiert sind, wo Dispergatoren 26 unter den röhrförmigen Einbauten 29 und über dem Gasanschluss 32 mittels eines Rohrbodens 33 angebracht sind. Die Kammer 31 ist mit einem Stuzen 34 versehen, der je nach den Bedingungen der Behandlung des Wassers mit Gas als Abwässereinlauf oder -auslauf dienen kann.

Im oberen Teil der Oxydationskolonne 11 sind die röhrförmigen Einbauten 29 mittels eines Rohrbodens 35 unter Bildung einer Phasentrennungskammer 36 mit einer geneigten Zwischenwand 37 und zwei vertikalen Zwischenwänden 38 und 39 befestigt, die sich über den röhrförmigen Einbauten 29 befinden.

Die Phasentrennungskammer 36 besitzt einen Stutzen 40 für die Gasabführung, einen Stutzen 41 für die Ölabführung und einen Stutzen 42, der je nach den Bedingungen der Behandlung des Wassers mit Gas als Abwässerauslauf oder -einlauf dienen kann.

Die geneigte Zwischenwand 37 ist mit ihrer Oberkante mit der Unterkante der vertikalen Zwischenwand 38 verbunden, wobei die Oberkante der Zwischenwand 38 unterhalb des Stuzens 41 für die Abführung der Ölphase liegt.

Die vertikale Zwischenwand 39 liegt mit ihrer Oberkante oberhalb des Stutzens 41 für die Abführung der Ölphase, während sie sich mit der Unterkante über der geneigten Zwischenwand 37 und unterhalb des Stutzens 42 befindet.

Die Phasentrennungskammer 36 kann röhrförmige Führungselemente 43 besitzen, die über und unter der geneigten Zwischenwand 37 angebracht sind. Die Führungselemente 43 werden in einem Abstand von der Zwischenwand 37 zur Bildung eines freien Wasserabflusses unter und über der Zwischenwand 37 angeordnet.

Die Oxydationskolonne 11 besitzt Stutzen 44 und 45 für die Wärmeträgereinführung und -abführung zur Erwärmung der Elemente der röhrförmigen Einbauten 29.

Die Phasentrennungskammer 36 kann mit den röhrförmigen Führungselementen 43 (Fig. 4) ausgeführt werden, die sich nur unter der geneigten Zwischenwand 37 befinden.

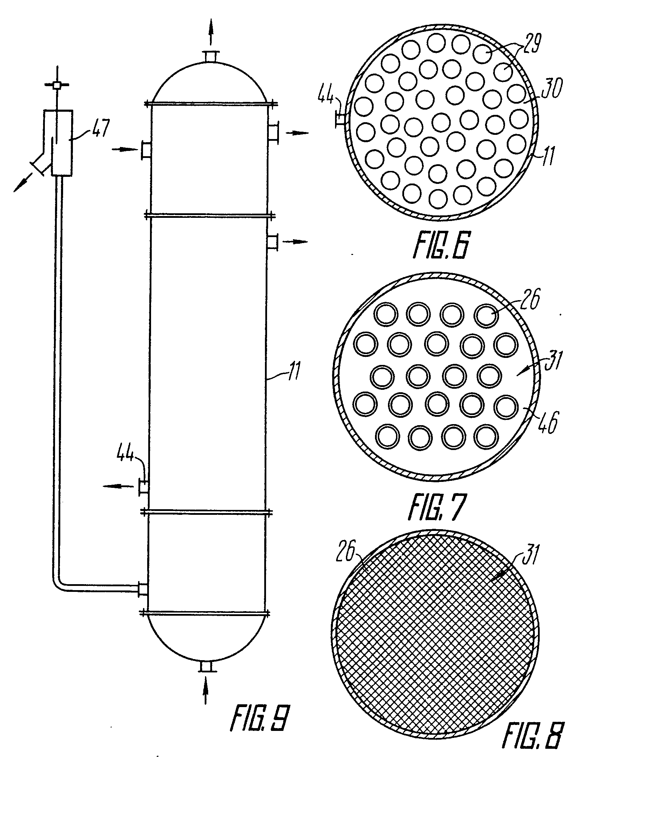

Die Phasentrennungskammer 36 (Fig. 5) kann ohne röhrförmige Führungselemente ausgeführt werden. Die Oxydationskolonne 11 (Fig. 6) kann mit einem zylindrischen Gehäuse ausgeführt werden, in welchem zylindrische röhrförmige Elemente 29 untergebracht sind.

Die Kammer 31 (Fig. 7) zur Sättigung des Wassers mit Gas kann einen Dispergator 26 in Form von zylindrischen gelochten röhrförmigen Elementen besitzen, welche mittels eines Röhrbodens 46 angebracht sind.

Die Kammer 31 (Fig. 8) zur Sättigung des Wassers mit Gas kann einen Dispergator 26 in Gestalt einer gelochten Platte besitzen.

Die Oxydationskolonne 11 (Fig. 9) kann eine Schiebereinrichtung 47 bei der Benutzung des Stutzens 44 als Abwässerauslauf besitzen.

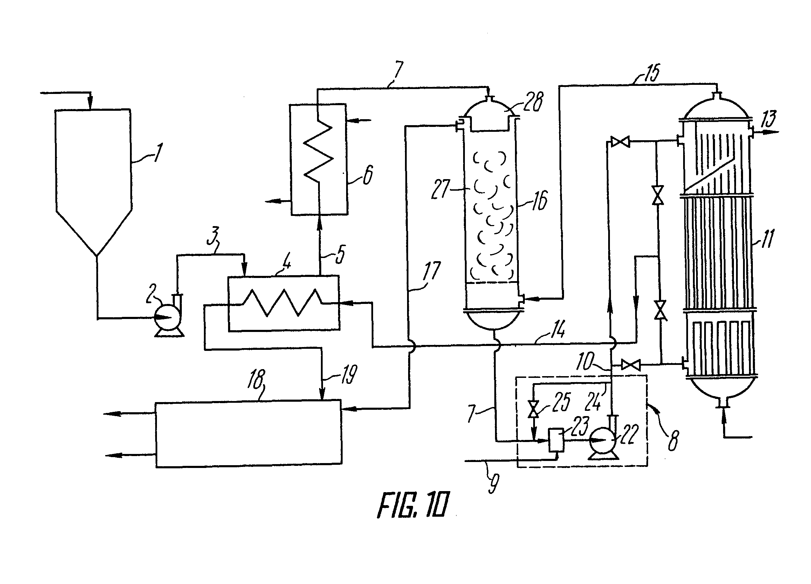

In Fig. 10 ist eine Variante des technologischen Prinzipschemas des Anlage zur Abwasserreini-gung dargestellt, welche folgendermassen arbei-tet.

Ein Ausgangswasserstrom füllt den Behälter 1 für Abwässer und wird mittels der Pumpe 2 über die Rohrleitung 3 in den Wärmeaustauscher 4 kontinuierlich oder periodisch gefördert, wo ein Wärmeaustausch mit dem Strom des behandelten Abwassers erfolgt. Danach wird das teilweise vorgewärmte Wasser über die Rohrleitung 5 dem Vorwärmer 6 zugeführt, wo die Temperatur auf vorgeschriebene Werte dank der Benutzung eines äusseren Wärmeträgers erhöht wird. Aus dem Vorwärmer 6 wird das erwärmte Abwasser als Strom über die Rohrleitung 7 in den Abscheider 16 geleitet, wo es am Füllkörper 27 mit dem Strom der Abluft aus der Oxydationskolonne 11 kontaktiert, welcher in den unteren Teil des Abscheiders 16 (des Gaswäschers) über die Rohrleitung 15 gelangt. Bei der Wechselwirkung des Abwasserstromes mit dem erwärmten Abgas gibt das letztere Wärme ab und wird zugleich von toxischen und anderen Beimengungen gereinigt, die die Eigenschaft besitzen, aus dem Gas ins Wasser bei deren Wechselwirkung am Füllkörper überzugehen.

Das gereinigte Gas aus dem Gaswäscher wird entweder in die Atmosphäre ausgelassen oder wird in der Technologie der Phasentrennung bei dessen Zuführung über die Rohrleitung 17 in den Phasentrenner 18 verwertet.

Das Abwasser gelangt aus dem Gaswäscher 16 über die Saugleitung 7 in den Reaktor 8, wo es im Mischer 23 mit Reagenzien behandelt wird, und dann wird es mittels der Pumpe 22 in die Oxyda-tionskolonne 11 gefördert und läuft zum Teil über die Rohrleitung 24 mit der Regeleinrichtung 25 an den Eintritt des Reaktors 8 zurück, was den Effekt der Behandlung des Abwassers mit Reagenzien und den der mechanischen Behandlung des Gemisches zwecks Destabilisierung und Aggregierung der hochdispersen Teilchen emulgierter Öle erhöht.

Das mit Reagenzien behandelte Wässer gelangt dann in die Oxydationskolonne 11, wo eine zusätzliche Destabilisierung und Aggregierung der dispersen Ölteilchen im gasgesättigten turbu-lenten Abwasserstrom aufgrund der Oxydations-prozesse im Abwasservolumen und an den Trennungsflächen Wasser-Ölteilchen zustande kommt, wobei der Dispergator 26 das geforderte Raumverhältnis von Wasser und Gas gewährleistet, die röhrförmigen Einbauten 29 eine intensive und effektive Oxydation der Beimengungen bei gleichzeitiger Koaleszenz der Öle in Aggregate bei deren Vereinigung miteinander und mit den Gas-bläschen sicherstellt, die Phasentrennungskam-mer die Trennung des Abgases, der ausgeschiedenen grobdispersen Öle und des behandelten Wassers gewährleistet. Das behandelte Wasser mit den Restölen gelangt über die Rohrleitung 14 in den Wärmeaustauscher 4, wo es mit dem Ausgangs-Abwasser teilweise abgekühlt wird, worauf es über die Rohrleitung 19 dem Phasentrenner 18 zugeführt wird, wo aus dem Wasser Öle und andere Beimengungen endgültig entfernt werden, wobei das gereinigte Wasser ohne Schaden für die Umwelt entweder direkt ausgelassen oder nach dessen zusätzlicher Nachreinigung in den Betrieben wieder verwendet werden kann.

Die erfindungsgemässe Ausführung der Anlage zur Abwasserreinigung gestattet es, die Aufgabe der Schaffung einer intensiven und effektiven Technologie der Phasentrennung emulgierter disperser Systeme und im besonderen ölhaltiger Abwässer zu lösen, welche Technologie sich durch Kompaktheit, Betriebszuverlässigkeit und einfache Bedienung auszeichnet.

Die vorliegende Erfindung kann auf verschiedenen Gebieten der Industrieproduktion angewendet werden, wo ein hoher Grad der Trennung konzentrierter ölhaltiger Abwässer und anderer emulgierter Systeme erforderlich ist. Sie kann in der chemischen Industrie bei der Reinigung der Kondensate von mit Koksgas, mit Stickstoff-Wasserstoff-Gemischen betriebenen Kompressoren, bei der Reinigung der Kondensate, die sich bei der Regeneration von Ölabsorbern mit Wasserdampf bilden, Anwendung finden. In der Erdöl- und Erdgasindustrie kann die Erfindung bei der Separierung des Erdöls aus dem Gaskondensat verwendet werden. In der Hüttenindustrie kann die Erfindung in der Reinugungstechnologie von Salzen und ölhaltigen Abwässern angewendet werden.

**Patentansprüche**

1. Anlage zur Abwasserreinigung, die einen Behälter (1) für Abwässer enthält, welcher mit einer Pumpe (2) verbunden ist, die mit einem Vorwärmer (6) in Verbindung steht, der mit dem Eintritt einer Oxydationskolonne (11) verbunden ist, deren Austritt mit einem Wärmeaustauscher (3) in Verbindung steht, wobei die Oxydationskolonne (11) einen Gasanschluss (12) für die Gaszufuhr und eine Gasableitung für Abgas aufweist, die mit einem Abscheider (16) verbunden ist, dadurch gekennzeichnet, dass sie mit einem Reaktor (8) zur Behandlung von Abwässern mit Reagenzien, welcher zwischen dem Vorwärmer (6) und der Oxydationskolonne (11) angeordnet ist, und mit einem Phasentrenner (18) zusätzlich versehen ist, der mit dem Wärmeaustauscher (3) in Verbindung steht, welcher mit seinem Kältmitteleinlauf und -auslauf zwischen der Pumpe (2) und dem Vorwärmer (6) geschaltet ist.

2. Anlage zur Abwasserreinigung nach Anspruch 1, dadurch gekennzeichnet, dass der Phasentrenner (18) zusätzlich mit dem Abscheider (16) in Verbindung steht.

3. Anlage zur Abwasserreinigung nach Anspruch 1, dadurch gekennzeichnet, dass der Reaktor (8) zur Behandlung von Abwässern mit Reagenzien in Form einer Pumpe (22) und eines Mischers (23) von Wasser und Reagenzien ausgeführt ist, der am saugseitigen Eintritt der Pumpe (22) angebracht ist, welcher mittels eines Zirkulationsrohres (24) mit dem druckseitigen Austritt der Pumpe (22) in Verbindung steht, während der Abscheider (16) als Gaswäscher ausgebildet und mit seinem Abwassereinlauf und -auslauf zwischen dem Vorwärmer (6) und dem Mischer (23) von Wasser und Reagenzien, mit seinem Gasanschluss und seiner Gasableitung aber zwischen der Oxydationskolonne (11) und dem Phasentrenner (18) geschaltet ist.

4. Anlage zur Abwasserreinigung nach Ansprüchen 1 oder 3, dadurch gekennzeichnet, dass die Oxydationskolonne (11) röhrförmige Einbauten (29) besitzt, die über einem Gasdispergator (26) auf der Seite des Gasanschlusses unter Bildung einert Kammer (31) zur Sättigung des Abwassers mit Gas monitiert sind, welche Kammer über einen Stutzen (34) für die Wasserzufuhr verfügt, sowie eine geneigte Zwischenwand (37) und zwei vertikale Zwischenwände (38, 39) aufweist, die über den röhrförmigen Einbauten (29) angebracht sind und im oberen Oxydationsteil der Kolonne (11) eine Kammer (36) zur Phasentrennung bilden, welche Stutzen (40, 42, 41) für die Gasabführung, für die Wasserzufuhr und für die Abführung der Ölphase besitzt, wobei bei der einen vertikalen Zwischenwand (38) die Unterkante an die Oberkante der geneigten Zwischenwand (37) angeschlossen ist, während die Oberkante unterhalb des Stutzens (41) für die Abführung der Ölphase liegt, und wobei bei der zweiten vertikalen Zwischenwand (39) die Oberkante oberhalb des Stutzens (41) für die Abführung der Ölphase gelegen ist, während sich die Unterkante über der geneigten Zwischenwand (37) und unterhalb des Stutzens (42) für die Wasserzufuht befindet.

5. Anlage zur Abwassereinigung nach Anspruch 4, dadurch gekennzeichnet, dass der Gasdispergator (26) in Form von gelochten röhrförmigen Elementen ausgebildet ist, die in der Oxydationskolonne (11) über dem Gasanschluss mittels eines Rohrbodens (46) angebracht sind.

6. Anlage zur Abwasserreinigung nach Ansprüchen 4 oder 5, dadurch gekennzeichnet, dass die Phasentrennungskammer (36) mit röhrförmigen Führungselementen (43) versehen ist, die über und unter der geneigten Zwischenwand (37) und in einem Abstand von ihr für den Wasserdurchfluss angebracht sind, wobei die Oberkanten der zwischen den vertikalen Zwischenwänden (39, 38) befindlichen Führungselemente in gleicher Höhe mit der Oberkante der vertikalen Zwischenwand (38) liegen, die mit der geneigten Zwischenwand (37) verbunden ist.

**Revendications**

1. Installation d'épuration d'eau usée, qui contient un réservoir (1) pour eaux usées, qui est relié à une pompe (2) qui est en communication avec un préchauffeur (6) qui est relié à l'entrée d'une colonne d'oxydation (11) dont la sortie est en communication avec un échangeur de chaleur (3), la colonne d'oxydation (11) comportant un raccord d'alimentation en gaz (12) pour l'amenée de gaz et une conduite d'évacuation de gaz pour l'effluent gazeux, qui est reliée à un séparateur (16), caractérisée en ce qu'elle est pourvue additionnellement d'un réacteur (8) pour le traitement d'eaux usées par des réactifs, lequel est disposé entre le préchauffeur (6) et la colonne d'oxydation (11) et d'un séparateur de phases (18) qui est en comunication avec l'échangeur de chaleur (3) qui est branché par ses entrée et sortie de fluide réfrigérant entre la pompe (2) et le préchauffeur (6).

2. Installation d'épuration d'eau usée selon la revendication 1, caractérisée en ce que le séparateur de phases (18) est additionnellement en communication avec le séparateur (16).

3. Installation d'épuration d'eau usée selon la revendication 1, caractérisée en ce que le réacteur (8) pour le traitement d'eaux usées par des réactifs est réalisé sous la forme d'une pompe (22) et d'un mélangeur (23) d'eau et de réactifs, qui est installé à l'entrée côté aspiration de la pompe (22), laquelle entrée est en communication au moyen d'un tube de circulation (24) avec la sortie côté refoulement sous pression de la pompe (22) tandis que le séparateur (16) est réalisé sous forme de laveur de gaz et branché par ses entrée et sortie d'eau usée entre le préchauffeur (6) et le mélangeur (23) d'eau et de réactifs mais par son raccord d'alimentation en gaz et sa conduite d'évacuation de gaz entre la colonne d'oxydation (11) et le séparateur de phases (18).

4. Installation d'épuration d'eau usée selon la revendication 1 ou 3, caractérisée en ce que la colonne d'oxydation (11) possède des moyens tubulaires installés (29) qui sont montés au-dessus d'un disperseur de gaz (26) du côté du raccord d'alimentation en gaz avec formation d'une chambre (31) pour la saturation de l'eau usée avec du gaz, laquelle chambre dispose d'une tubulure (34) pour l'amenée d'eau, et comporte aussi une cloison inclinée (37) et deux cloisons verticales (38, 39) qui sont installées au-dessus des moyens tubulaires installés (29) et forment, dans la partie d'oxydation supérieure de la colonne (11), une chambre (36) pour la séparation de phases, laquelle possède des tubulures (40, 42, 41) pour l'évacuation de gaz, pour l'amenée d'eau et pour l'évacuation de la phase huileuse, et, dans le cas de l'une des cloisons verticales (38), le bord inférieur est raccordé au bord supérieur de la cloison inclinée (37) tandis que le bord supérieur est situé en dessous de la tubulure (41) pour l'évacuation de la phase huileuse, et, dans le cas de la seconde cloison verticale (39), le bord supérieur est situé au-dessus de la tubulure (41) pour l'évacuation de la phase huileuse tandis que le bord inférieur se trouve au-dessus de la cloison inclinée (37) et en dessous de la tubulure (42) pour l'amenée d'eau.

5. Installation d'épuration d'eau usée selon la revendication 4, caractérisée en ce que le disperseur de gaz (26) est réalisé sous la forme d'éléments tubulaires perforés qui sont installés dans la colonne d'oxydation (11) au moyen d'un plancher tubulaire (46) au-dessus du raccord d'alimentation en gaz.

6. Installation d'épuration d'eau usée selon la revendication 4 ou 5, caractérisée en ce que le chambre de séparation de phases (36) est pourvue d'éléments tubulaires de guidage (43) qui sont installés au-dessus et en dessous de la cloison inclinée (37) et à une certaine distance de celle-ci pour le passage d'écoulement d'eau, les bords supérieurs des éléments de guidage, se trouvant entre les cloisons verticales (39, 38), étant situés au même niveau que le bord supérieur de la cloison verticale (38) qui est reliée à la cloison inclinée (37).

**Claims**

1. Waste-water purification plant which contains a container (1) for waste water which is connected to a pump (2) which is in communication with a preheater (6) which is connected to the inlet of an oxidation column (11), the outlet of which is in communication with a heat exchanger (3), the oxidation column (11) having a gas connection (12) for the gas supply and a gas discharge line for exit gas, which is connected to a separator (16), characterized in that the said plant is additionally provided with a reactor (8) for treating waste water with reagents, which is arranged between the preheater (6) and the oxidation column (11), and with a phase separator (18) which is in communication with the heat exchanger (3) which is connected with its coolant inlet and outlet between the pump (2) and the preheater (6).

2. Waste-water purification plant according to Claim 1, characterized in that the phase separator (18) is additionally in communication with the separator (16).

3. Waste-water purification plant according to Claim 1, characterized in that the reactor (8) for treating waste water with reagents is designed in the form of a pump (22) and a water and reagent mixer (23) which is arranged on the suction-side inlet of the pump (22), which inlet is in communication with the delivery-side outlet of the pump (22) by means of a circulation pipe (24), while the separator (16) is designed as a gas washer and is connected with its waste-water inlet and outlet between the preheater (6) and the water and reagent mixer (23), but with its gas connection and its gas discharge line between the oxidation column (11) and the phase separator (18).

4. Waste-water purification plant according to Claims 1 or 3, characterized in that oxidation column (11) possesses tubular internal elements (29) which are mounted above a gas disperser (26) on the gas-connection side forming a chamber (31) for saturating the waste water with gas, which chamber is equipped with a connection nozzle (34) for the water supply, and also has an inclined partition (37) and two vertical partitions (38, 39) which are mounted above the tubular internal elements (29) and form in the upper oxidation part of the column (11) a chamber (36) for phase separation which has connection nozzles (40, 42, 41) for discharging gas, for supplying water and for discharging the oil phase, the lower edge in the case of one vertical partition (38) being connected to the upper edge of the inclined partition (37), while the upper edge lies below the connection nozzle (41) for discharging the oil phase, and the upper edge in the case of the second vertical partition (39) being situated above the connection nozzle (41) for discharging the oil phase, while the lower edge is located above the inclined partition (37) and below the connection nozzle (42) for the water supply.

5. Waste-water purification plant according to Claim 4, characterized in that the gas disperser (26) is designed in the form of perforated tubular elements which are mounted inside the oxidation column (11) above the gas connection by means of a tube base-plate (45).

6. Waste-water purification plant according to Claims 4 or 5, characterized in that the phase separation chamber (36) is provided with tubular guide elements (43) which are mounted above and below the inclined partition (37) and at a distance from it for the water circulation, the upper edges of the guide elements located between the vertical partitions (39, 38) lying at the same height as the upper edge of the vertical partition (38) which is connected to the inclined partition (37).

FIG.1

FIG. 2

FIG. 3

FIG. 4

FIG. 5

FIG.6

FIG.7

FIG.8

FIG.9

3

FIG. 10

EP 0 289 602 B1